# DEMANDE DE BREVET EUROPEEN

(11) **EP 0 872 178 A1**
(43) Date de publication de la demande: **21.10.1998**
(21) Numéro de dépôt: 98400945.6
(22) Date de dépôt: 16.04.1998
(51) Int. Cl.: A01K 3/00, E04H 17/06, E04H 17/08, E04H 17/00

(54) **Clôtures grillagées et plus particulièrement mais non exclusivement celles utilisées pour interdire l'accès aux voies ferrées**

(30) Priorité: 17.04.1997 FR 9704745
(71) Demandeur: Van Landeghem, Emile, F-51310 Esternay (FR)
(72) Inventeur: Van Landeghem, Emile, F-51310 Esternay (FR)
(74) Mandataire: Leszczynski, André

(57) **Abrégé**

L'invention est relative à une attache (7) pour clôture grillagée (1).

Elle comporte à une extrémité un moyen d'accrochage (12) et est munie sur sa longueur et sur un même côté de griffes (21) dirigées vers ladite extrémité.

## Description

La présente invention concerne les clôtures grillagées et plus particulièrement mais non exclusivement celles utilisées pour interdire l'accès aux voies ferrées.

De telles clôtures comportent des grillages à mailles rectangulaires par exemple, constitués par la réunion de fils généralement horizontaux et verticaux, soudés en leurs entrecroisements.

Lorsqu'un animal d'un poids important tel qu'un sanglier frappe avec son groin de façon répétée la base du grillage pour tenter de la soulever et de passer dessous, les fils horizontaux peuvent rompre ou se désolidariser des fils verticaux.

La clôture peut ainsi être endommagée au point de devenir franchissable.

Les animaux, qui traversent alors les voies, risquent d'être percutés par les trains.

On a cherché à renforcer les clôtures grillagées existantes en plaquant sur ces dernières un grillage supplémentaire de moindre hauteur mais partiellement enfoui dans le sol.

Une telle solution, qui exige la réalisation d'une tranchée, est coûteuse à mettre en oeuvre.

La présente invention vise principalement à rendre une clôture grillagée infranchissable par des animaux tels que des sangliers.

Elle y parvient grâce à une attache pour clôture grillagée, caractérisée par le fait qu'elle comporte à une extrémité un moyen d'accrochage tel qu'un crochet par exemple et par le fait qu'elle est munie sur sa longueur et sur un même côté de griffes dirigées vers ladite extrémité.

Dans une réalisation particulière, l'attache est constituée par l'assemblage d'un fer principal recourbé vers le haut à son extrémité inférieure pour former ledit crochet et d'une pluralité de fers de courte longueur, soudés obliquement sur le corps du fer principal, pour former lesdites griffes.

De préférence, le nombre de griffes est supérieur ou égal à trois.

De préférence encore, l'attache comporte cinq griffes, les quatre premières en partant dudit crochet étant disposées avec un écartement constant, et la dernière avec un écartement supérieur.

L'invention a encore pour objet un dispositif de fixation pour clôture grillagée, caractérisé par le fait qu'il comporte des attaches telles que précitées et des dispositifs d'ancrage dans le sol à relier aux attaches.

Ce dispositif peut comporter en outre des inserts de forme allongée, assujettis au grillage dans le sens de sa longueur. Chaque insert est constitué par exemple par un fer rond, dont le diamètre est de préférence supérieur ou égal à 12 mm.

L'invention a encore pour objet une clôture grillagée, caractérisée par le fait qu'elle comporte des attaches telles que définies plus haut, accrochées par le dessus sur les fils du grillage et reliées à des points d'ancrage dans le sol.

L'invention a encore pour objet un procédé pour rendre infranchissable par un animal tel qu'un sanglier une clôture grillagée, caractérisé par le fait qu'il comporte les étapes consistant à :
- mettre en place des attaches telles que définies plus haut, ces attaches venant s'accrocher sur le grillage de la clôture,
- réaliser des points d'ancrage dans le sol le long du grillage, chaque attache étant reliée à un point d'ancrage dans le sol.

De préférence, l'on réalise au niveau de chaque point d'ancrage un léger renfoncement dans le sol et les points d'ancrage sont constitués par des dispositifs d'ancrage qui sont enfoncés dans ces renfoncements, l'enfoncement des dispositifs d'ancrage dans le sol exerçant une traction dirigée vers le bas sur les attaches.

Les attaches s'opposent au soulèvement du grillage par les animaux, et au franchissement de la clôture.

D'autres caractéristiques et avantages de la présente invention apparaîtront à la lecture de la description détaillée qui va suivre, et à l'examen du dessin annexé sur lequel :
- la figure 1 est une vue schématique, partielle et en perspective, d'une clôture grillagée équipée d'attaches conformément à un premier exemple de mise en oeuvre de l'invention,
- la figure 2 est une coupe schématique montrant trois inserts reliés par une attache commune à un dispositif d'ancrage dans le sol,
- la figure 3 représente isolément ce dispositif d'ancrage dans le sol,
- la figure 4 illustre l'utilisation dos à dos de deux dispositifs d'ancrage dans le sol,
- les figures 5 à 7 représentent respectivement trois exemples de réalisation d'attaches selon l'invention, et
- la figure 8 est une vue schématique partielle et en perspective, d'une clôture grillagée équipée d'attaches conformément à un deuxième exemple de mise en oeuvre de l'invention.

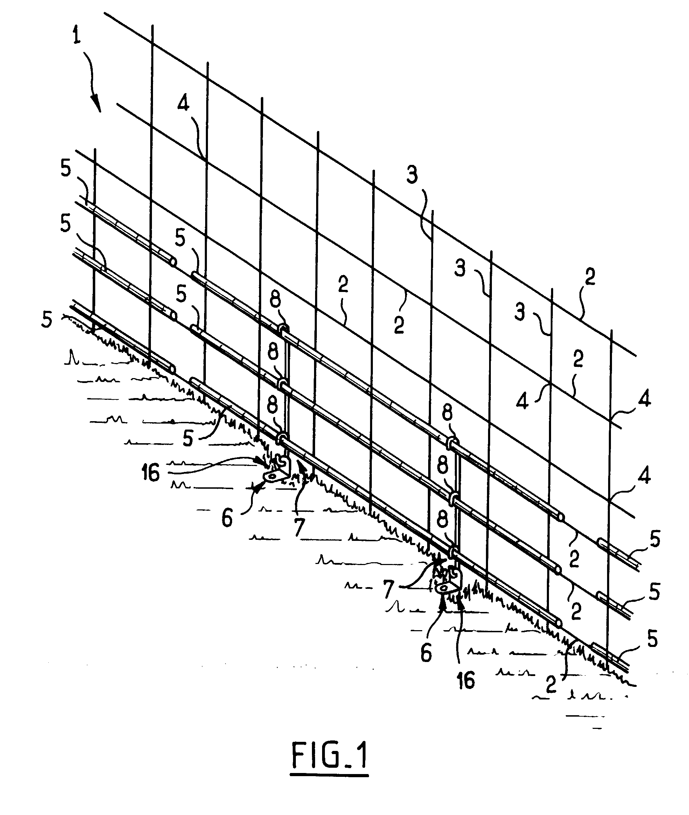

La clôture grillagée 1, partiellement représentée sur la figure 1, comporte un grillage formé par la réunion d'un ensemble de fils métalliques 2 parallèles au sol et d'un ensemble de fils métalliques 3 perpendiculaires aux premiers, assemblés par une soudure à l'arc en leurs entrecroisements 4.

Les fils 2 sont supportés par des poteaux implantés par exemple le long d'une voie ferrée et non représentés.

Les fils 3 sont de préférence, comme représenté, disposés avec un écartement constant entre eux, égal à 20 cm par exemple.

Les fils 2 sont de préférence, comme représenté, disposés avec un écartement croissant de bas en haut.

Ainsi, l'écartement entre les quatre premiers fils 2 en partant du bas est de 4 cm par exemple et passe ensuite à 6 cm par. exemple pour les deux fils suivants, pour atteindre 10 puis 20 cm par exemple en haut du grillage, non représenté.

De préférence, le fil 2 situé le plus en bas du grillage est au niveau de la surface du sol.

Bien entendu, l'invention s'applique à toute clôture quels que soient le nombre et l'écartement des fils constituant le grillage, ou la forme des mailles, qui peut être en losange par exemple.

Dans un premier exemple de mise en oeuvre de l'invention, des rangées d'inserts 5, constitués chacun par un fer rond de 1 m de long environ et de 12 mm de diamètre environ, sont assujetties à la base du grillage.

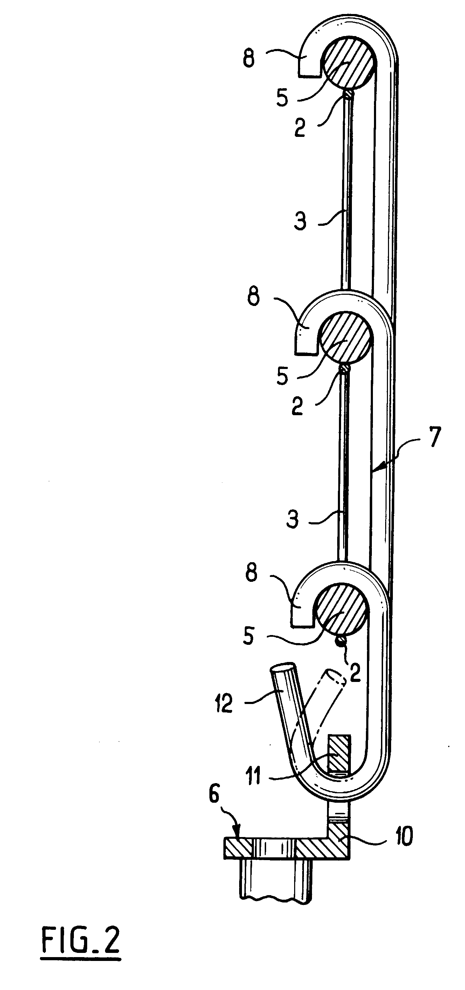

Chaque rangée est constituée par un ensemble d'inserts 5 disposés dans le prolongement l'un de l'autre, chacun des inserts 5 d'une rangée étant tissé entre des fils 3 et reposant sur un même fil 2, comme représenté plus particulièrement sur la figure 2.

La mise en place de chaque insert 5 se fait aisément, en l'insérant parallèlement aux fils 2 dans les mailles du grillage, de part et d'autre d'au moins trois fils 3.

Des attaches 7 comportant des griffes 8 venant s'accrocher sur les inserts 5 sont accrochées sur des dispositifs d'ancrage 6 enfoncés dans le sol.

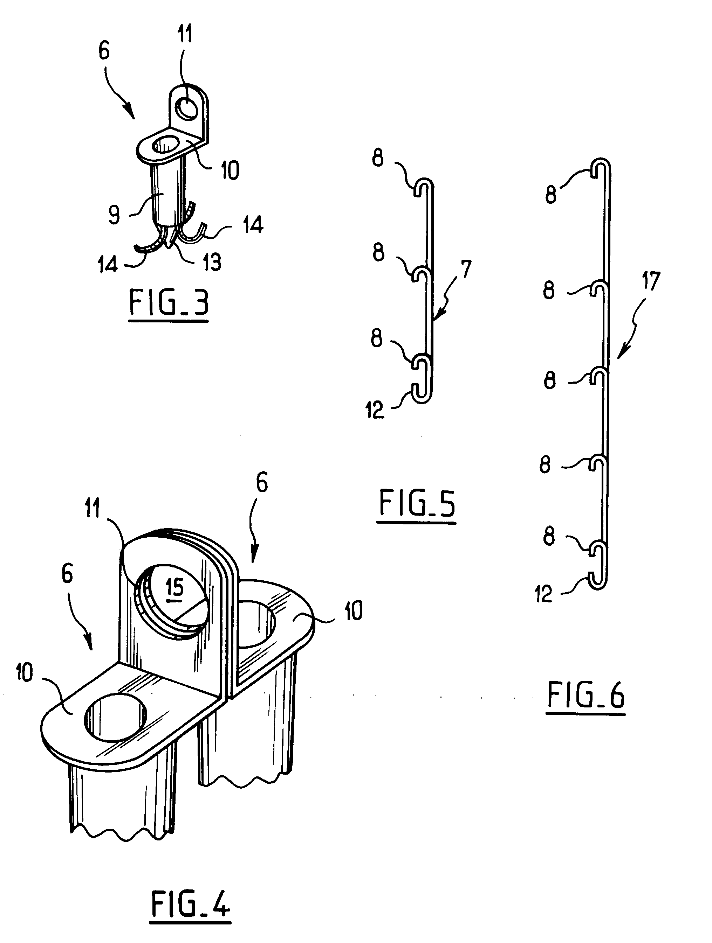

On a représenté sur la figure 3 un dispositif d'ancrage 6 isolément.

Dans l'exemple de réalisation décrit, on utilise des dispositifs d'ancrage commercialisés sous la dénomination "FENOX" par les Etablissements FAYNOT à Montherme dans les Ardennes.

Chaque dispositif d'ancrage 6 comporte un tube métallique 9 à insérer dans le sol, muni à son extrémité supérieure d'une patte 10 coudée en équerre, dont le montant 11 est percé pour servir à l'accrochage d'une attache 7.

Un pieu métallique 13, muni à son extrémité inférieure de fils 14, est descendu dans le tube 9 fiché en terre.

Au cours de l'enfoncement du pieu 13, les fils 14 sortent du tube 9 et s'écartent dans le sol, rendant ainsi difficile son extraction.

On peut utiliser si nécessaire, pour un meilleur ancrage dans le sol et comme illustré sur la figure 4, deux dispositifs d'ancrage 6 disposés dos à dos de manière à présenter une ouverture commune 15 pour l'accrochage d'une attache 7.

Chaque attache 7 comporte une extrémité inférieure recourbée vers le haut pour former un crochet 12, destiné à s'accrocher sur un dispositif d'ancrage 6.

Ce crochet 12 peut éventuellement être rabattu vers l'intérieur après son insertion dans le perçage d'une patte 10, comme illustré en traits mixtes sur la figure 2, pour être rendu plus difficile à décrocher.

On a représenté isolément sur la figure 5 une attache 7 comportant trois griffes 8, dont l'écartement correspond à celui des trois premiers fils 2 du grillage, comptés en partant du bas.

On peut réaliser, sans sortir du cadre de la présente invention, des attaches avec un nombre quelconque de griffes, selon le degré de renforcement souhaité de la clôture.

A titre d'exemple, on a représenté sur la figure 6 une attache 17 comportant deux griffes 8 de plus que la précédente.

Comme on pourra le constater à l'examen de cette figure, l'écartement entre la griffe 8 située à l'extrémité supérieure de l'attache et celle située immédiatement en dessous est supérieur à l'écartement entre les griffes inférieures, ceci pour tenir compte du fait que les fils 2 sont disposés avec un écartement croissant sur le grillage.

Les attaches 7 et 17 représentées sur les figures 5 et 6 sont réalisées en partant d'un fer conformé en C pour réaliser le crochet 12 et la griffe 8 adjacente.

Ensuite, selon le nombre de griffes 8 supplémentaires que doit comporter l'attache, on vient souder en les superposant dans le sens de la hauteur des fers conformés chacun en crosse, et présentant chacun la longueur adaptée à l'écartement entre les fils 2 correspondants du grillage.

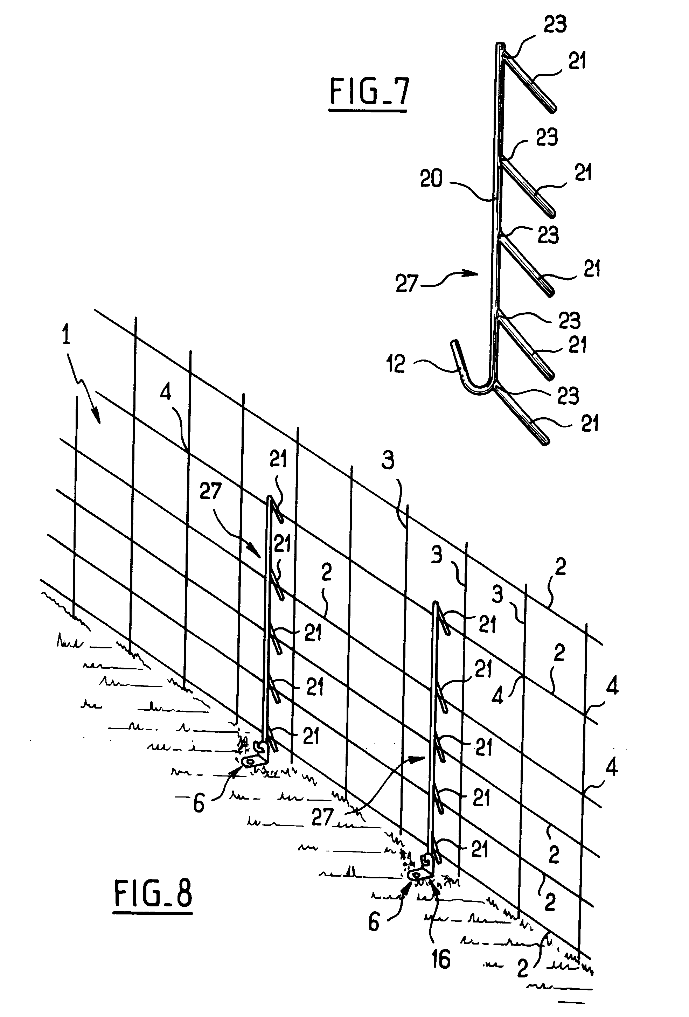

On a représenté sur la figure 7 une attache 27 conforme à une variante de réalisation.

Cette attache 27 est réalisée à partir d'un fer principal 20, de section ronde, recourbé vers le haut à son extrémité inférieure pour former le crochet 12.

Une pluralité de fers 21 de section ronde et d'un moindre diamètre que le fer principal, et de courte longueur sont soudés sur le corps rectiligne du fer principal 20.

Les fers 21 sont droits et sont soudés obliquement à une extrémité sur le corps du fer principal 20, étant tous sensiblement parallèles, dirigés vers le bas diamétralement à l'opposé du crochet 12.

Les fers 21 constituent des griffes destinées à venir en prise sur les fils 2.

On remarquera sur la figure 7 que le premier fer 21 en partant du bas est soudé sur le corps du fer principal 20 sensiblement à la base du crochet 12, que les trois fers 21 suivants sont disposés avec un écartement constant entre eux tandis que le dernier fer 21 est soudé à proximité de l'extrémité supérieure du fer principal 20, l'écartement entre ce dernier fer 21 et le précédent étant supérieur à celui entre les autres fers 21.

L'attache est zinguée de manière à résister à la corrosion.

Les attaches conformes à l'invention peuvent s'utiliser sans munir la clôture grillagée d'inserts 5, comme illustré sur la figure 8.

Sur cette figure, on a représenté deux attaches 27 dont les griffes viennent en prise par le dessus directement sur les fils 2 du grillage.

D'une manière générale, on choisira la densité linéaire des dispositifs d'ancrage 6 et des attaches, ainsi que le nombre de rangées d'inserts 5 le cas échéant, en fonction notamment de la nature du grillage, de celle du terrain et de sa pente.

On préférera ainsi augmenter la densité des attaches et des dispositifs d'ancrage 6 lorsque le grillage se situe dans un creux, et que la tension des fils 2 tend à éloigner sa base du sol.

Si l'on utilise des inserts, on commence par munir le grillage de ces inserts 5 que l'on fait reposer sur les fils 2, puis les attaches sont accrochées sur les inserts 5.

Si l'on n'utilise pas d'inserts 5, les attaches sont accrochées directement sur les fils 2.

Des renfoncements 16 sont creusés dans le sol aux emplacements où seront enfoncés les dispositifs d'ancrage 6.

Ensuite, les dispositifs d'ancrage 6 sont enfoncés partiellement dans le sol.

Les crochets 12 des attaches sont engagés dans les perçages des pattes 10, puis les dispositifs d'ancrage 6 sont enfoncés complètement dans le sol, et exercent alors sur les attaches une traction vers le bas, ce qui assure le maintien en prise des griffes des attaches sur les fils 2 (ou sur les inserts 5 lorsque ceux-ci sont présents) ainsi que le maintien de l'accrochage des crochets 12 sur les pattes 10.

Lorsque le grillage a des mailles en forme de losange et que l'on utilise des inserts 5, ceux-ci reposent sur les entrecroisements des fils.

Le grillage renforcé par le dispositif selon l'invention s'avère particulièrement résistant aux assauts des sangliers notamment, car les attaches s'opposent au soulèvement de la base du grillage par le groin de l'animal.

D'autre part, lorsque l'on utilise en outre des inserts 5, les efforts exercés localement sur le grillage se trouvent repris par une surface relativement importante du grillage, de sorte qu'aucun fil ou soudure ne rompt.

Bien entendu, l'invention n'est pas limitée aux exemples de réalisation qui viennent d'être décrits.

On peut notamment varier la forme des attaches et le cas échéant celle des inserts.

L'utilisation de fers ronds pour réaliser les inserts est toutefois avantageuse car ces derniers sont alors peu coûteux et relativement aisés à installer sur le grillage.

On peut bien entendu utiliser d'autres dispositifs d'ancrage que ceux décrits, ainsi que des attaches réalisées autrement.

## Revendications

1. Attache pour clôture grillagée, caractérisée par le fait qu'elle comporte à une extrémité un moyen d'accrochage (12) et par le fait qu'elle est munie sur sa longueur et sur un même côté de griffes (8;21) dirigées vers ladite extrémité.

2. Attache pour clôture grillagée, caractérisée par le fait que ledit moyen d'accrochage est constitué par un crochet (12).

3. Attache pour clôture grillagée selon la revendication 2, caractérisée par le fait qu'elle est constituée par l'assemblage d'un fer principal (20) recourbé vers le haut à son extrémité inférieure pour former ledit crochet et d'une pluralité de fers (21) de courte longueur, soudés obliquement sur le corps du fer principal, pour former lesdites griffes.

4. Attache selon l'une quelconque des revendications précédentes, caractérisée par le fait que le nombre de griffes (8;21) est supérieur ou égal à trois.

5. Attache pour clôture grillagée selon la revendication 4, caractérisée par le fait qu'elle comporte cinq griffes (8;21), les quatre premières en partant dudit moyen d'accrochage (12) étant disposées avec un écartement constant, et la dernière avec un écartement supérieur.

6. Dispositif de fixation pour clôture grillagée, caractérisé par le fait qu'il comporte des attaches telles que définies dans l'une quelconque des revendications précédentes, et des dispositifs (6) d'ancrage dans le sol à relier aux attaches.

7. Dispositif selon la revendication 6, caractérisé par le fait qu'il comporte en outre des inserts (5) de forme allongée, assujettis au grillage dans le sens de sa longueur.

8. Dispositif selon la revendication précédente, caractérisé par le fait que chaque insert (5) est constitué par un fer rond, dont le diamètre est de préférence supérieur ou égal à 12 mm.

9. Clôture grillagée, caractérisée par le fait qu'elle comporte des attaches (7;17;27) telles que définies dans l'une quelconque des revendications 1 à 5, accrochées par le dessus sur les fils (2) du grillage et reliées à des points d'ancrage dans le sol.

10. Procédé pour rendre infranchissable par un animal tel qu'un sanglier une clôture grillagée, caractérisé par le fait qu'il comporte les étapes consistant à :
- mettre en place des attaches (7;17;27) telles que définies dans l'une quelconque des revendications 1 à 5, venant s'accrocher sur le grillage de la clôture,
- réaliser des points d'ancrage dans le sol le long du grillage, chaque attache (7;17;27) étant reliée à un point d'ancrage dans le sol.

11. Procédé selon la revendication 10, caractérisé par le fait que l'on réalise au niveau de chaque point d'ancrage un léger renfoncement (16) dans le sol et par le fait que les points d'ancrage sont constitués par des dispositifs d'ancrage (6) qui sont enfoncés dans ces renfoncements (16), l'enfoncement des dispositifs d'ancrage dans le sol exerçant une traction dirigée vers le bas sur les attaches (7;17;27).
